# NEW EUROPEAN PATENT SPECIFICATION

(11) **EP 1 951 084 B2**
(45) Date of publication and mention of the opposition decision: **02.08.2017**
(45) Mention of the grant of the patent: 27.06.2012
(21) Application number: 06812805.7
(22) Date of filing: 31.10.2006
(51) Int. Cl.: B29C 45/16

(54) **TOOTHBRUSH DEVICE**
ZAHNBÜRSTENVORRICHTUNG
DISPOSITIF DE BROSSE À DENTS

(30) Priority: 31.10.2005 NO 20055077
(43) Date of publication of application: 06.08.2008
(73) Proprietor: Lilleborg AS, 0276 Oslo (NO)
(72) Inventor: ØKSETH, Geir, N-1392 Vettre (NO)
(74) Representative: Tappe, Udo
(86) International application number: PCT/NO2006/000388
(87) International publication number: WO 2007/053034

(56) References cited:
- WO-A1-00/64306
- WO-A1-96/01577
- WO-A1-97/29663
- WO-A1-98/12947
- WO-A1-99/08564
- WO-A1-02/078489
- WO-A1-2004/043669
- FR-A5- 2 079 455
- US-B1- 6 298 516
- US-B1- 6 332 233
- US-B1- 6 687 940

## Description

The present invention relates to a toothbrush and a method for the manufacture of a toothbrush. The invention is especially directed towards a toothbrush having a wear-resistant, easily alterable decor and a method for the manufacture of such a toothbrush.

Today, toothbrushes are often made by moulding one or more plastic materials using a suitable mould-ing tool. When using the same moulding tool, the appearance of the brushes can basically only be altered by changing the colour of the plastic material or materials used. This gives only a limited number of possible variations. To change the physical dimensions of a brush, a new moulding tool must be made which involves substantial costs. Today, there is a great need for toothbrushes of varying appearance to enable each individual person's toothbrush to be easily identified. Furthermore, season-dependent decoration will make it easier for the user to remember when he started to use the toothbrush and when it is time to get a new one. For reasons of cleaning efficiency and hygiene, toothbrushes should be replaced at regular intervals. It is very important for dental health that toothbrushes have an attractive appearance which can help to encourage the use of the toothbrush and thus enhance dental health. Consequently, it will be advantageous if the decoration on a toothbrush model can be altered continuously and adapted to trends and cultures without this involving a substantial increase in production costs.

It is known that prints can be used to impart a new appearance to a product. However, the application of a print on a toothbrush involves a number of technical challenges. As a rule, the handle constitutes the largest surface area of the toothbrush, and consequently the handle has the must opportunities for applying a print, but application of a print on the neck is also conceivable. To provide the user with a good and comfortable grip around the handle, it is usually made having a rounded, almost cylindrical form. This applies also to the neck of the toothbrush, where sharp edges could damage the lips and gums. High quality printing on a distinctly curved surface, especially a surface that curves in more than one direction, is very difficult and not suitable for mass production. Furthermore, the neck and handle of a toothbrush are often subjected to moisture, toothpaste and wear when in use, and this means that the print must be capable of withstanding such treatment both so that the toothbrush will maintain its attractive appearance and so that the user does not have some of the print or ink transferred to his mouth.

From JP11075938 it is known to coat a toothbrush with a urethane resin film to protect prints and the like.

EP1119272 describes a toothbrush which is formed of two parts surrounding a cavity. The two parts are therefore not moulded together, but are fastened to each other in another manner.

WO2004/024016 describes embedding objects in a toothbrush handle made of a relatively soft material. There is no mention of embedding prints.

US 6 687 940 describes a toothbrush including a joined two piece construction having a hollow or tubular interior cavity, and wherein the two pieces may be partially or wholly translucent, and wherein ornamental objects may occupy the cavity when the toothbrush includes transparent portions.

WO2004/043669 describes the application of a decoration with its visible face down against a transparent basic body and moulding a plastic material on to the rear side of the decoration. The decorated body produced may form a part of a toothbrush.

The present invention provides a toothbrush device characterised by the features set out in the characterising portion of claim 1.

Preferred embodiments of the invention are set forth in the subsidiary claims.

The handle, neck and head of the toothbrush are preferably essentially made of a hard plastic material. The transparent plastic material is preferably a hard plastic material. By the term "sectional surface" is meant, within the scope of the present invention, any surface, plane or curved, although preferably just single curved, which can be formed through a section in the head, neck and/or handle of a toothbrush. Consequently, the sectional surface may extend orthogonally to the main direction of the bristles, or in the main direction of the bristles or in any plane therebetween. The sectional surface may also extend both along the longitudinal direction of the handle and transverse thereto or at any angle therebetween.

The term "transparent" in the present invention means allowing at least so much light through that in natural light conditions a person would be able to observe the print or label through the transparent material or materials.

Within the scope of the present invention, the term "curved" includes both convex and concave curvature.

When utilising the present invention, known printing techniques can be used such as silk printing, tampon printing, hot stamping or decal printing. To obtain a high-quality print decal printing is preferred. It is also possible to use pre-printed labels.

The device according to the invention solves the aforementioned problems associated with the application of prints and provides a method which makes it possible to alter the appearance of a toothbrush without having to change the moulding tool.

The present invention will be described in more detail with reference to the attached drawings, wherein:
Figure 1a is a side view of an embodiment of a toothbrush according to the invention;
Figure 1b shows a part of the toothbrush according to Figure 1a;
Figure 2 is a schematic illustration of the structure of an embodiment of a toothbrush;
Figures 3a and 3b show a second embodiment of a toothbrush according to the invention;
Figure 4a is a cross-sectional view of the toothbrush shown in Figure 1a; and
Figure 4b is a cross-sectional view of the toothbrush shown in Figure 3a.

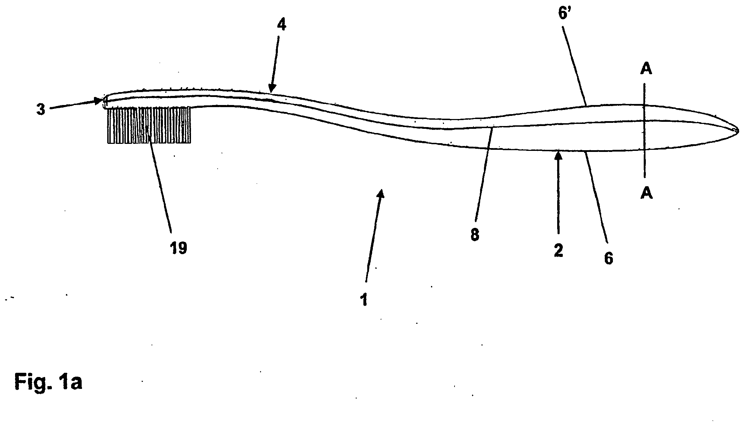

The toothbrush 1 shown in Figure 1a comprises a handle 2, a head 3 and a neck 4 connecting the head to the handle. The head 3 comprises bristles 19. In this embodiment, the toothbrush 1 comprises a sectional surface 8 extending in the longitudinal direction of the handle through the whole of the handle, neck and head. The sectional surface has an undulating cross-section along the longitudinal length of the brush and extends approximately orthogonally to the direction of the bristles 19.

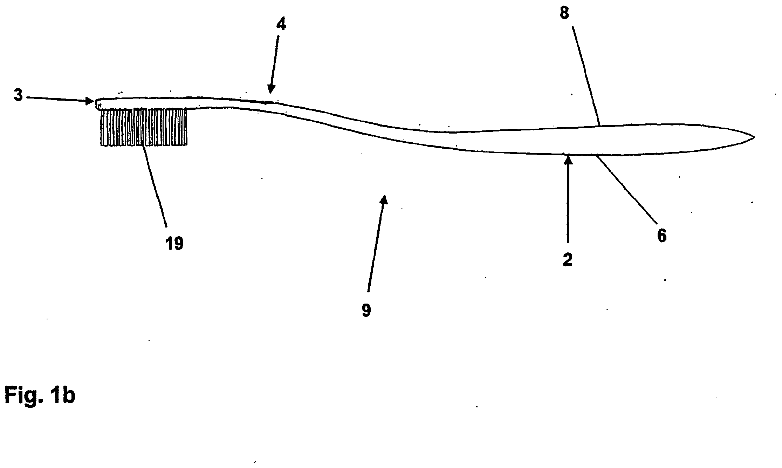

The sectional surface can be seen more clearly from Figure 1b, which shows a portion 9 of the toothbrush according to Figure 1a. The outer surfaces 6 and 6' of the toothbrush, in particular the handle and head of the brush, are double curved, and consequently it is difficult to use decal printing technique or application of a pre-printed label.

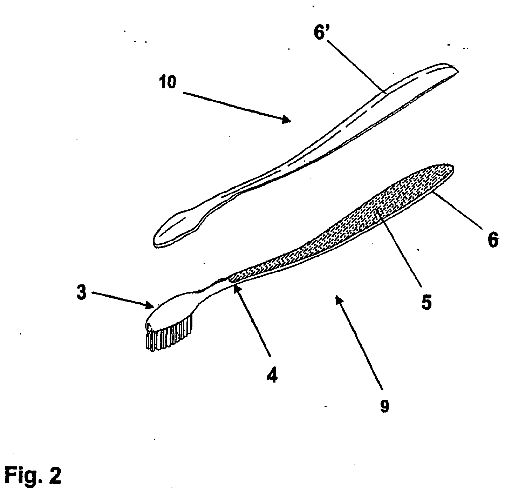

When utilising an embodiment of the present invention, a first portion 9, as shown in Figure 2, is moulded first. This portion 9 comprises a single curved or plane sectional surface to which a print or a label may be applied using standard printing techniques, such as decal printing or the like. A second portion 10 is then moulded on top of the print 5 so that it becomes surrounded by plastic and is protected against water, chemicals and direct contact with the user's mouth. The print 5 may cover the whole sectional surface or a part thereof. In this embodiment the print 5 covers the sectional surface through the handle and parts of the neck. It is also possible to mould the portion 10 first, print on the sectional surface of that portion and then mould the portion 9. The sectional surface may, as mentioned above, have any orientation in space and the size thereof may therefore also vary.

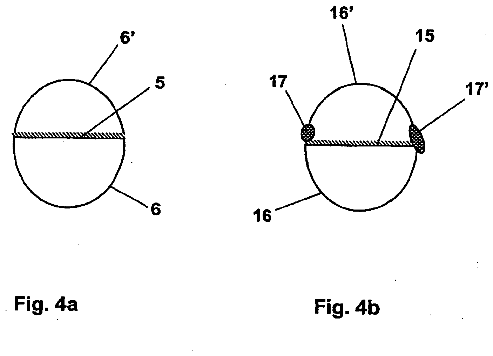

Figure 4a illustrates a cross-section through the brush shown in Figure 1a along the line A-A. Here the thickness of the print 5 has been increased substantially for the purposes of illustration. As can be seen from the figure, the print 5 has been applied to a surface that is plane relative to the cross-section.

In the embodiment illustrated in this figure, the sectional surface extends through the whole of the longitudinal direction of the toothbrush, i.e., through the handle, neck and head. This embodiment is especially advantageous as sectional surfaces that start and/or end along the longitudinal direction of the toothbrush are avoided. The sectional surface describes the transition between the plastic material that is applied in respectively the first and the second moulding step. Surprisingly, it has been found that if the sectional surface ends and/or begins in the neck or the head so that the join extends transverse to the longitudinal direction of the brush, this means that the join may cause notching and thus a weakening in the brush so that the danger of breaks around the join increases considerably. By allowing the sectional surface 8 to extend as shown in Figure 1a from the free end of the handle right up to the free end of the head, the join does not form any lines transverse to the longitudinal direction of the brush and the danger of notching is avoided.

At least one of the portions 9 and 10 is at least partly made of a transparent plastic material which means that at least a part of the print/label is visible from the outside. Furthermore, the curved outer surfaces 6 and 6' cause attractive optical effects when made of a transparent material.

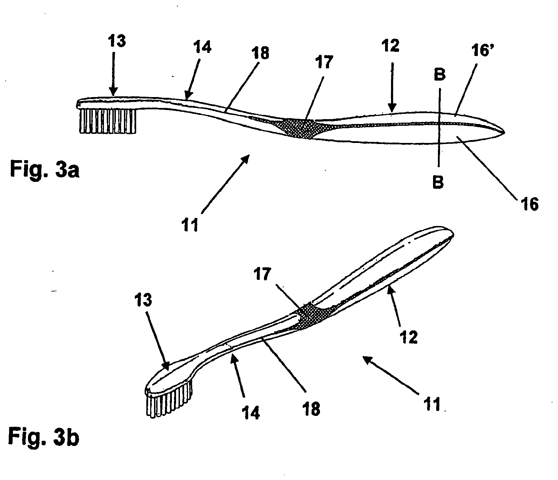

Figures 3a and 3b show a second embodiment of the present invention. The toothbrush 11 comprises a handle 12, a head 13 and a neck 14 arranged therebetween. A sectional surface 18 extends from the free end of the handle 12 to the free end of the head 13. Furthermore, the toothbrush comprises a further preferably softer plastic material 17 which covers a part of the join along the periphery of the sectional surface 18. Figure 4b illustrates the cross-section of the brush in Fig. 3a along the line B-B. Here, the print 15 can be seen. The thickness of the print has been increased to make it visible, as otherwise it would in this plane only form a thin line. The softer plastic material 17, 17' may either abut the join as illustrated by 17 or cover the join as illustrated by 17'. Figures 3a-3b further show that the material 17 at one or two points may surround larger areas of the brush in order to form, for example, a grip portion.

It is also possible to make the toothbrush of the present invention by using more than the two materials referred to herein. Thus, a first and second portion may be moulded from two different materials.

## Claims

1. A toothbrush device (1, 11) comprising a handle (2, 12), a head (3, 13) and neck (4, 14) connecting the handle to the head, wherein the handle and/or the neck and/or the head at least partly are made of a transparent plastic material, and wherein the handle (2, 12) and/or the head (3, 13) and/or the neck (4, 14) comprise an embedded print (5) or an embedded label visible through said transparent material, **characterised in that** the embedded print (5, 15) or the embedded label is arranged on at least a part of a sectional surface (8, 18) extending through the handle (2, 12), the neck (4, 14) and the head (3, 13), the term "sectional surface" meaning any surface, plane or curved, although preferably just single curved, which is formed through a section in the head, neck and handle of the toothbrush, whereby the sectional surface (8, 18) extends from the free end of the head to the free end of the handle.

2. A toothbrush device according to claim 1, **characterised in that** at least a part of the transparent section comprises a curved outer surface (6, 6').

3. A toothbrush deice according to any one of claims 1 or 2, **characterised in that** it further comprises an additional optionally softer plastic material (17) which forms a part of the surface of the handle (2, 12) and optionally of the neck (4, 14).

4. A toothbrush device according to claim 3, **characterised in that** the additional plastic material (17) is arranged at least partly over one or more joins in the handle (2, 12) and/or the neck (4, 14).

## Patentansprüche

1. Zahnbürstenvorrichtung (1, 11) umfassend einen Griff (2, 12), einen Kopf (3, 13) und einen Hals (4, 14), der den Griff mit dem Kopf verbindet, wobei der Griff und/oder der Hals und/oder der Kopf zumindest teilweise aus einem transparenten Kunststoffmaterial hergestellt ist, und wobei der Griff (2, 12) und/oder der Kopf (3, 13) und/oder der Hals (4, 14) einen vergossenen Abdruck (5) oder eine vergossene Inschrift, der bzw. die durch das transparente Material sichtbar ist, umfassen, **dadurch gekennzeichnet, dass** der vergossene Abdruck (5, 15) oder die vergossene Inschrift auf zumindest einem Teil einer Schnittfläche (8, 18), die sich durch den Griff (2, 12), den Hals (4, 14) und den Kopf (3, 13) erstreckt, angeordnet ist, wobei der Ausdruck "Schnittfläche" irgendeine Fläche, eben oder gekrümmt, obwohl vorzugsweise nur einfach gekrümmt, bedeutet, die durch einen Abschnitt in Kopf, Hals und/oder Griff einer Zahnbürste geformt wird, wobei sich die Schnittfläche (8, 18) vom freien Endes des Kopfes zum freien Ende des Griffs erstreckt.

2. Zahnbürstenvorrichtung nach Anspruch 1, **dadurch gekennzeichnet, dass** zumindest ein Teil des transparenten Abschnitts eine gekrümmte äußere Fläche (6, 6') umfasst.

3. Zahnbürstenvorrichtung nach irgendeinem der Ansprüche 1 oder 2, **dadurch gekennzeichnet, dass** sie weiter ein zusätzliches optionales weicheres Kunststoffmaterial (17) umfasst, das einen Teil der Oberfläche des Griffs (2, 12) und optional des Halses (4, 14) bildet.

4. Zahnbürstenvorrichtung nach Anspruch 3, **dadurch gekennzeichnet, dass** das zusätzliche Kunststoffmaterial (17) zumindest teilweise über einer oder mehreren Verbindungsstellen im Griff (2, 12) und/oder Hals (4, 14) angeordnet ist.

## Revendications

1. Dispositif de brosse à dents (1, 11) comprenant un manche (2, 12), une tête (3, 13) et un col (4, 14) raccordant le manche à la tête, dans lequel le manche et/ou le col et/ou la tête sont au moins partiellement réalisés avec une matière plastique transparente, dans lequel le manche (2, 12) et/ou la tête (3, 13) et/ou le col (4, 14) comprennent une impression encastrée (5) ou une étiquette encastrée visible à travers ladite matière transparente, **caractérisé en ce que** l'impression encastrée (5, 15) ou l'étiquette encastrée est agencée au moins sur une partie d'une surface sectionnelle (8, 18) s'étendant à travers le manche (2, 12), le col (4, 14) et la tête (3, 13), le terme « surface sectionnelle » signifiant toute surface plane ou incurvée, bien que de préférence juste une seule surface incurvée, qui est formée à travers une section dans la tête, le col et le manche de la brosse à dents, moyennant quoi la surface sectionnelle (8, 18) s'étend à partir de l'extrémité libre de la tête jusqu'à l'extrémité libre du manche.

2. Dispositif de brosse à dents selon la revendication 1, **caractérisé en ce qu'**au moins une partie de la section transparente comprend une surface externe incurvée (6, 6').

3. Dispositif de brosse à dents selon l'une quelconque des revendications 1 ou 2, **caractérisé en ce qu'**il comprend en outre une matière plastique facultativement plus souple (17) supplémentaire qui fait partie de la surface du manche (2, 12) et facultativement du col (4, 14).

4. Dispositif de brosse à dents selon la revendication 3, **caractérisé en ce que** la matière plastique (17) supplémentaire est agencée au moins partiellement sur un ou plusieurs jointures dans le manche (2, 12) et/ou le col (4, 14).
